# EUROPEAN PATENT APPLICATION

(11) **EP 1 422 819 A1**
(43) Date of publication of application: **26.05.2004**
(21) Application number: 03026261.2
(22) Date of filing: 14.11.2003
(51) Int. Cl.: H02P 7/28, G05F 1/59

(54) **System for controlling a load, particularly a DC motor**

(30) Priority: 15.11.2002 IT TO20020995
(71) Applicant: BTM S.r.l., 10123 Torino (IT)
(72) Inventor: Marchitto, Luciano, 10015 Ivrea (IT)
(74) Representative: Quinterno, Giuseppe

(57) **Abstract**

The system comprises:
a DC voltage source (2);
a first controlled conduction electronic control device (Q) or master device, disposed between the load (3) and the source (2) in a first circuit branch and having an input terminal intended to receive a conduction control signal (INS);
at least one further controlled conduction electronic controlled device (Q1) or slave device, disposed between the load (3) and the source (2) in a further circuit branch essentially in parallel to the said first circuit branch;
slave circuit devices (4, 5, 8) arranged to control the conduction of current of the said at least one slave device (Q1) in a manner tending to reduce the difference between the currents flowing in operation in the master device (Q) and in the or a slave device (Q1); and
balancing circuit devices (20-22) arranged to generate and apply to the input terminal of the master control device (Q) an auxiliary conduction control signal tending to increase the conduction of current in this master control device (Q) when the current flowing in operation in the or a slave control device (Q1) exceeds the current flowing in the master control device (Q).

## Description

The present invention relates to a system for controlling a load, in particular for controlling a DC electric motor.

More specifically, the subject of the invention is a control system of the type defined in the introductory part of Claim 1.

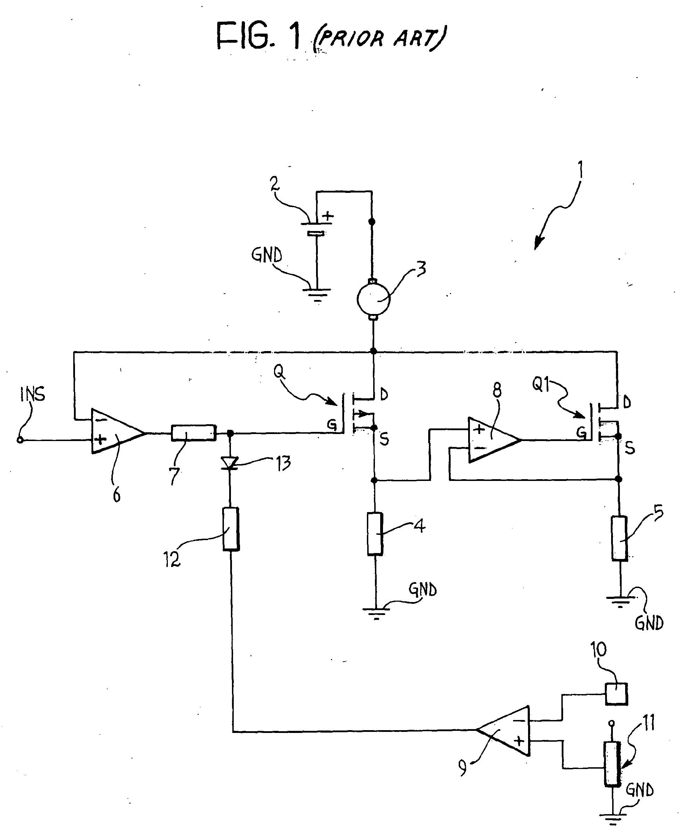

A prior art such system is shown in Figure 1 of the attached drawings. This system comprises a DC supply source 2, such as, for example, a battery. In the embodiment illustrated this source has its negative terminal connected to ground GND and its positive terminal connected to a load terminal represented by a DC electric motor 3. The' other terminal of the load 3 is connected to ground GND through a first circuit branch which includes a controlled conduction electronic piloting device, or master device, indicated Q and a resistor 4 functioning as a current sensor for detecting the current which flows in the master device Q.

In parallel with this circuit branch there is connected at least one further branch, comprising a controlled conduction electronic piloting device Q1, or slave device, and an associated resistor 5 serving as a current sensor for detecting the current which flows through this slave device. The master device Q and slave device Q1 are conveniently MOSFET transistors.

The input terminal or gate of the master device Q is connected to the output of a piloting amplifier 6, for example, an operational amplifier, through a resistor 7. One input of this amplifier 6 is intended to receive, in operation, an external control signal. A second input of the amplifier 6 is connected to the drain of the master transistor Q for determining, in operation, the magnitude of the voltage applied to the load 3.

The reference numeral 8 indicates a further amplifier, for example, an operational amplifier, the non-inverting and inverting inputs of which are connected to the resistors 4 and 5 in the manner illustrated, and the output of which is connected to the input terminal or gate of the slave transistor Q1.

The reference numeral 9 indicates a comparator having one input connected to a temperature sensor 10 and the other input connected to a reference voltage or threshold generator 11. The temperature sensor 10 is associated with the drain of the master transistor Q, or to a heat sink element common to the master transistor Q and to the slave transistor or transistors.

The output of the comparator 9 is coupled to the input or gate of the master transistor Q through a resistor 12 and a diode 13. The piloting circuit according to the prior art described above operates essentially in the following manner.

In normal operation, depending on the amplitude of the external control signal INS the conduction of current in the master transistor Q, and therefore the current flowing in the load 3, varies correspondingly. The comparator 8 compares instant by instant, the currents flowing in the master transistor Q and in at least one slave transistor Q1 and pilots the input or gate of the slave transistor Q1 in such a way as to tend to equalise the currents which flow in the set transistors.

If, for any reason, a short circuit in the master transistor Q between the drain and the source, should occur during operation, the current which is caused to flow in the motor 3 becomes the maximum envisaged value, which corresponds to the maximum speed of rotation. In this situation, however, no damage to the load of the motor 3 or to the slave transistor or transistors Q1 or to other components such as the resistors 4 and 5 occurs. In particular, conditions which might cause fire do not occur.

With the prior art circuit described above there can however be a serious problem if in operation a short circuit in the or a slave transistor should occur. In this case the magnitude of the current in this slave transistor increases very rapidly, and the power dissipated by it increases as the square of this current. This can lead to damage to this transistor and/or the associated resistor.

One object of the present invention is to provide a control circuit which makes it possible to avoid this disadvantage.

This object is achieved according to the invention with a control circuit the main characteristics of which are defined in the annexed Claim 1.

With reference still to Figure 1, in the prior art circuit the comparator 9 acts to reduce the input or gate signal to the master transistor Q, correspondingly causing a reduction in the power dissipated on all the transistors, both master and slave, when the sensor 10 signals a temperature which exceeds a predetermined threshold. If the sensor 10 is associated with the drain of the master transistor Q the comparator 9 does not allow an effective protection to be obtained if the overheating originates at a slave transistor. If, on the other hand, the sensor 10 is associated with the heat sink common to all the transistors, problems can occur whenever between one or more of these transistors and the common dissipater there is not a good thermal conduction.

It is therefore a further object of the present invention to provide a control circuit which makes it possible to avoid this disadvantage as well.

Further characteristics and advantages of the invention will become apparent from the following detailed description, given purely by way of non-limitative example, with reference to the attached drawings, in which:
Figure 1, already described, shows a prior art control circuit; and
Figure 2 is a circuit diagram of a control circuit according to the invention.

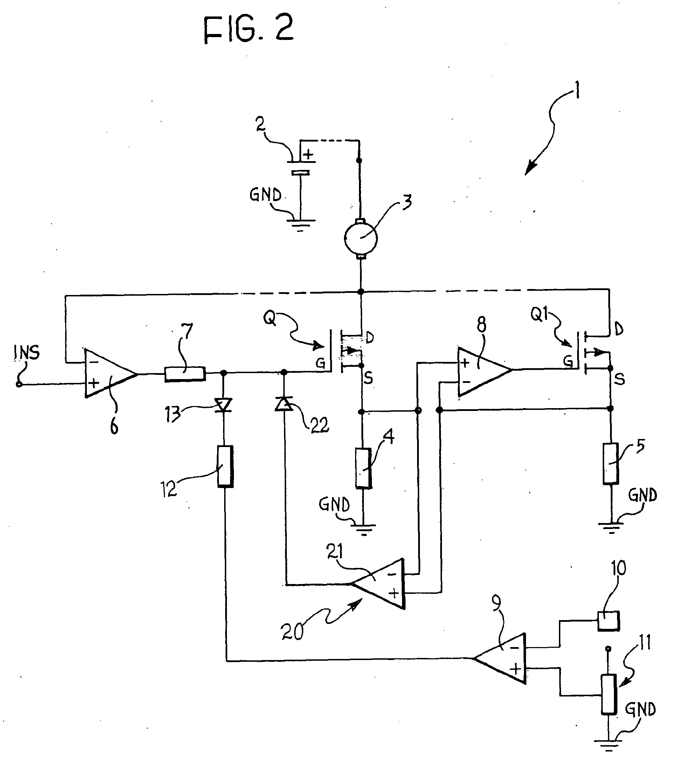

In Figure 2 the parts and elements already described have been given the same alphabetic symbols or reference numerals used previously.

The control circuit according to the invention shown in Figure 2 differs from the previously described prior art circuit essentially in two aspects.

A first aspect relates to the addition of a balancing circuit generally indicated 20, intended to overcome the problems which can occur in cases which produce a short circuit in one of the slave transistors.

A further or second aspect of difference between the circuit of Figure 2 and that of Figure 1 is the location of the temperature sensor 10.

In the embodiment illustrated in Figure 2 the balancing circuit 20 comprises a comparator 21, comprising, for example, an operational amplifier, having first and second inputs connected in the manner illustrated to the resistors 4 and 5 (acting as current sensors). The output of the comparator 21 is coupled to the input or gate of the master transistor Q through a diode 22.

If in, operation, a short circuit should occur between the drain and the source of the slave transistor Q1, the current which flows through the circuit branch including this slave transistor increases, and correspondingly the voltage on the resistor 5 increases. Consequently, the comparator 21 intervenes to increase the signal on the gate of the master transistor Q, causing the current conducted by this master transistor to increase correspondingly.

The effect of the balancing circuit is therefore that of opposing the increase of current in the short circuited slave transistor by increasing the conduction of current in the master transistor.

If the control circuit 1 as a whole includes a plurality of slave transistors with associated respective current sensor resistors, the balancing circuit will include a corresponding plurality of comparators, each of which compares the current flowing in a slave transistor with that flowing in the master transistor Q, or with that flowing in the other or in another slave transistor.

Preferably, although not necessarily, in a control circuit 1 according to the invention the temperature sensor 10 is conveniently associated with the drain of the or a slave transistor. In this case, if this slave transistor overheats the comparator 9 can intervene effectively. If, on the other hand, the overheating is in the master transistor Q, the thermal protection comparator 9 does not intervene. In this case a short circuit between the drain and the source of the master transistor can be created, and consequently the current flowing in the electric motor 3 could increase to the maximum possible value. However, this does not involve any major damage, and in particular any risk or peril of fire. The control circuit according to the invention can be conveniently utilised on board a motor vehicle for controlling electric motors utilised for various purposes, for example for controlling a fan associated with the air conditioning installation.

Naturally, the principle of the invention remaining the same, the embodiments and details of construction can be widely varied with respect to what has been described and illustrated purely by way of non limitative example, without by this departing from the ambit of the invention as defined in the annexed claims.

## Claims

1. A system for controlling a load (3), in particular a DC electric motor (3), comprising:
a DC voltage supply source (2),
a first controlled conduction electronic control device (Q) or master device disposed between the load (3) and the said source (2) in a first circuit branch and having an input terminal intended to receive a signal (INS) for controlling conduction;
at least one further controlled conduction electronic control device (Q1), or slave device, disposed between the load (3) and the said source (2) in a further circuit branch essentially in parallel with the said first circuit branch; and
slave circuit means (4, 5, 8) arranged to control the conduction of current of the said at least one slave device (Q1) in a manner tending to reduce the difference between the currents flowing in operation in the master device (Q) and in the said at least one slave device (Q1):
the control circuit (1) being **characterised by** the fact that it further comprises:
balancing circuit means (20-22) arranged to generate and apply to the input terminal of the master control device (Q) an auxiliary conduction control signal tending to increase the conduction of current in the master control device (Q) when the current flowing in operation in the or a slave control device (Q1) exceeds the current flowing in the master control device (Q).

2. A control system according to Claim 1, further including a thermal protection circuit (9-13) operable to apply to the input terminal of the said master control device (Q) a signal tending to reduce the conduction of current in the said master device (Q) when a temperature sensor device (10) associated with the or a slave control device (Q1) indicates that the temperature at this slave control device (Q1) exceeds a predetermined value.

3. A control system according to Claim 1 or Claim 2, in which the master control device (Q) and the said at least one slave control device (Q1) are FET transistors, and in particular MOSFET transistors.

4. A control system according to any of the preceding claims, in which each of the said circuit branches is associated with a respective current sensor device (4,5) in particular a resistor disposed in series with the corresponding master control device (Q) or slave control device (Q1), and in which the said balancing circuit means (20) include at least one operational amplifier (21) having a first and a second input respectively connected to the current sensor device (4,5) associated with the master control device (Q) and to the said at least one slave control device (Q1), and an output coupled to the input terminal of the master control device (Q).

5. A control system according to Claims 2 and 3, in which the said temperature sensor (10) is associated with the drain of the or a slave MOSFET transistor (Q1).

6. A system for controlling a load (3), in particular a DC electric motor (3), comprising:
a DC voltage supply source (2),
a first FET transistor, in particular a MOSFET transistor (Q), or master transistor, disposed between the load (3) and the said source (2) in the first circuit branch and having an input terminal or gate intended to receive a conduction control signal (INS);
at least one further FET transistor, in particular a MOSFET transistor (Q1), or slave transistor, disposed between the load (3) and the said source (2) in a further circuit branch essentially in parallel to the said first circuit branch; and
master circuit means (4, 5, 8) arranged to control the conduction of current in the said at least one slave device (Q1) in a manner tending to reduce the difference between the magnitude of the currents flowing in operation in the master transistor (Q) and in the said at least one slave transistor (Q1);
the control circuit (1) being **characterised in that** it further includes a thermal protection circuit (9-13) operable to apply to the input terminal of the said master control device (Q) a signal tending to reduce the conduction of current in the said master device (Q) when the temperature sensor device (10) associated with the drain of the or a slave transistor (Q1) indicates that the temperature at the drain of the slave transistor (Q1) exceeds the predetermined value.
